Europäisches Patentamt

(19) European Patent Office

Office européen des brevets

(11) Publication number: **0 168 359**
**A1**

# (12) EUROPEAN PATENT APPLICATION

(21) Application number: **85830152.6**

(22) Date of filing: **17.06.85**

(51) Int. Cl.⁴: **A 47 J 37/12**
**A 47 J 37/04**

(30) Priority: **20.06.84 IT 2151084**

(43) Date of publication of application:
**15.01.86 Bulletin 86/3**

(84) Designated Contracting States:
**AT BE CH DE FR GB LI LU NL SE**

(71) Applicant: **Cavalli, Alfredo**
**Via Galileo Galilei 9**
**I-20060 Pessano con Bornago (Milano)(IT)**

(72) Inventor: **Cavalli, Alfredo**
**Via Galileo Galilei 9**
**I-20060 Pessano con Bornago (Milano)(IT)**

(74) Representative: **Vannini, Torquato et al,**
**JACOBACCI-CASETTA & PERANI S.p.A. 7 Via Visconti di**
**Modrone**
**I-20122 Milan(IT)**

(54) A foodstuff frying appliance, particularly for domestic use.

(57) In this frying appliance, foodstuff to be fried is subjected to a shower of hot oil. For that purpose, the frying appliance comprises a frying pan (3), a basket (5) holding the foodstuff and being received removably in the pan (3), and at least one sprayer (7, 8) for spraying the foodstuff in the basket (5) with hot oil. Also provided is a means of recovering the oil from the pan bottom (10), heating and pumping it to the sprayer (7, 8). Thus, the amount of oil required for optimum frying can be minimised.

EP 0 168 359 A1

./...

Croydon Printing Company Ltd

Fig-1

"A FOODSTUFF FRYING APPLIANCE, PARTICULARLY FOR DOMESTIC USE"

This invention relates to a foodstuff frying appliance, particularly for domestic use, which comprises a frying pan and a foodstuff holding basket received removably in the pan.

Frying is undoubtedly one of the most annoying and unpleasant cooking operations, owing to the frequent risk of boiling oil splashing out and to the greasy vapors released. On the other hand, specially tasty dishes can be prepared thereby.

In an attempt to minimize boiling oil splashes and the emission of greasy vapors while frying, some frying machines have been developed which comprise a (mostly thermally insulated) vessel wherein a suitable electric resistance heats a given amount of oil. A wire mesh basket containing foodstuff for frying can be introduced into the vessel; a closure lid is also provided which incorporates suitable filters to hold back the greasy vapors. Frying takes place by immersion in a hot oil bath, thereby the foodstuff being fried requires no periodic turning. Thus, the lid may be held closed throughout the cooking period to prevent the vapors from spreading.

A wide acceptance of such frying appliances is, however, hindered by that a large amount (usually liters) of oil is required if the foodstuff is to be held at all times fully immersed in it. Since, as is well known, oil deteriorates after a number of frying cycles, the fact that a large amount of oil must be replaced each time makes the frying appliance rather expensive in operation.

## SUMMARY OF THE INVENTION

It is an object of this invention to provide a novel frying appliance which only requires a small amount of frying oil for its operation.

This object is achieved by a frying appliance characterized in that it comprises at least one sprayer for spraying foodstuff contained in the appliance basket with hot oil, a means being provided for recovering the oil from the appliance pan bottom, heating it, and pumping it toward said at least one sprayer.

## BRIEF DESCRIPTION OF THE DRAWINGS

Further features and advantages of the frying appliance of this invention will be apparent from the ensuing description of two preferred embodiments thereof, given herein with reference to the accompanying drawings, where:

Figure 1 is a sectional view showing schematically a first embodiment of this frying appliance;

Figure 2 is a schematic perspective view of a second embodiment of the inventive frying appliance;

Figure 3 is a cross-sectional view of the frying appliance of Figure 2; and

Figure 4 is a ghost line end view of the frying appliance of Figure 2.

## DESCRIPTION OF THE PREFERRED EMBODIMENTS

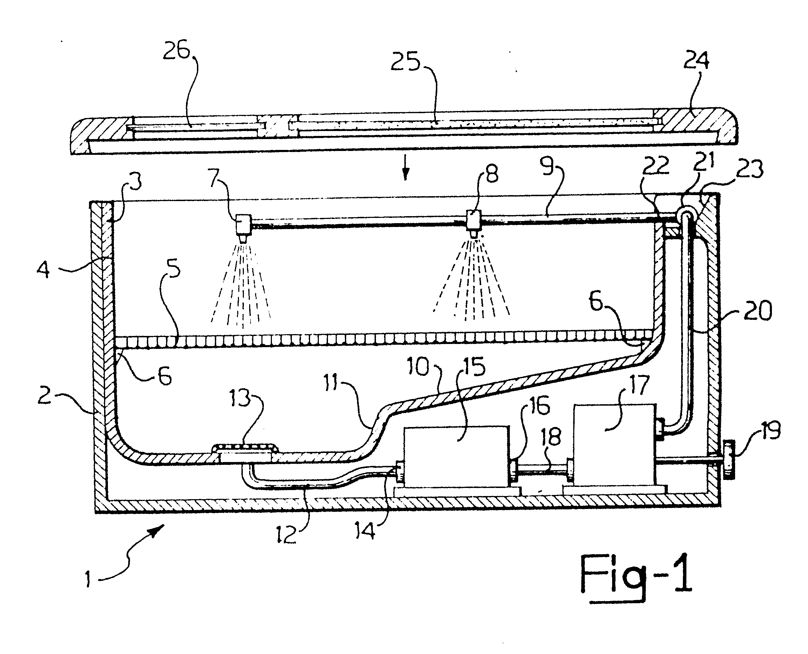

Generally indicated at 1 in Figure 1 is a frying appliance which comprises a substantially parallelepipedic box-like body 2 open at the top.

The body 2 supports on its interior a frying pan 3 which may be lined externally with a heat insulating layer 4.

A substantially flat mesh basket 5 is removably received on supports 6 in the pan 3. Operative above the basket 5 is at least one oil sprayer, e.g. two oil sprayers 7 and 8 which are fed and supported by a rigid pipe 9, in turn carried movably on the body 2 as explained hereinafter. The sprayers 7 and 8 are advantageously of the so-called "solid cone" type emitting a conical jet.

The pan 3 has a bottom 10 sloping toward an oil collect well 11. At the bottom of the well 11, there is arranged the inlet to an oil suction conduit 12 which is protected by a filter 13. Through the conduit 12, the well 11 is connected to the suction end 14 of a pump 15, such as, advantageously, a gear pump type. The delivery end 16 of the pump 15 is connected to a boiler 17 by a conduit or line 18. The boiler 17 is heated electrically and its heat output may be controlled from the outside through a knob 19. The boiler 17 is connected to the pipe 9 through a conduit 20 and rotary coupling 21 which allows for the pipe 9 to be raised for taking the basket 5 out of the pan 3. Two ledges 22 and 23 are formed on the body 2 for resting the pipe 9 thereon, respectively in its operating position within the pan 3, and in its raised position.

The pan 3 is closed at the top by a removable lid 24; the lid is provided with conventional filtering members, generally indicated at 25, and with a transparent portion 26 for monitoring the cooking in progress with the lid on. The lid 24 also has means of ensuring a tight seal on the pan 2, not shown because of a conventional nature.

The operation of the frying appliance 1 provides for frying by spraying the foodstuff contained in the basket 5 with hot oil.

Foodstuff to be fried, as placed in the basket 5, is subjected to a continuous shower of hot oil issuing from the sprayers 7 and 8. The frying oil is then collected in the well 11 together with any solid particles which may have separated from the foodstuff; and whereas such particles would be held back by the filter 13, the oil is drawn into the pump 15 and delivered into the boiler 17, whence it is supplied to the sprayers 7 and 8. The oil is circulated continuously, and is filtered and heated in a continuous cycle; thus, only a small amount of oil is required, in practice the amount needed to fill all the passages plus an optional small amount, present at all times in the well 11 as safety measure.

Of course, the frying appliance 1 may be modified in various ways, not shown. As an example, the frying pan may be of cylindrical shape and incorporate a single centrally mounted oil sprayer, or the boiler may be replaced with resistance heaters accommodated in the well. Further, the oil shower may be provided from different spraying arrangements, e.g. of the perforated tube type, or the sprayers may be mounted on the walls and/or bottom of the frying pan.

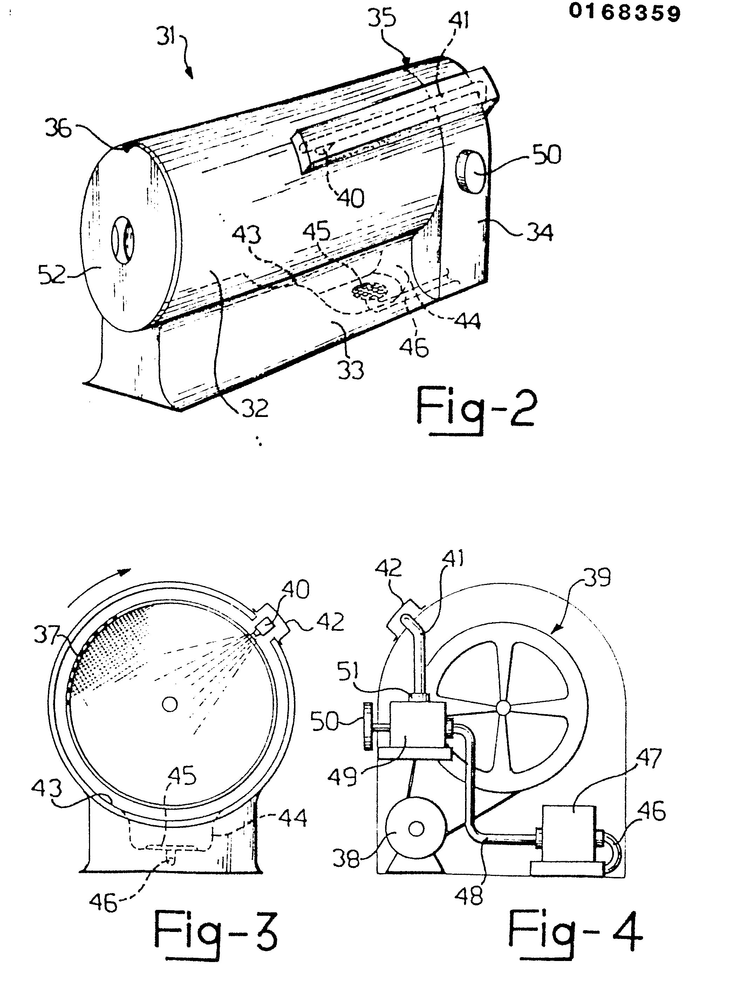

A primary modified embodiment of the inventive frying appliance is illustrated by Figures 2,3 and 4. A frying appliance 31 thus embodied comprises a frying pan 32 of cylindrical shape which is laid horizontally on a base 33 and associated at a closed end 35 thereof with a box-like body 34, its opposed end 36 being left open.

Inserted axially and supported rotatably in the pan 32 is a basket 37 in the form of a cylindrical drum which is driven rotatively at a low speed (but a few rpm) by an electric motor 38 through a drive belt 39, being both housed in the box-like body 34.

Arranged to operate within the pan 32 is an oil sprayer 40 fed from a conduit 41 externally of the pan 32 and protected by a shroud 42.

The other components of the frying appliance 31 are similar to the corresponding components of the frying appliance 1 above. Accordingly, there are provided a bottom 43 sloping down toward a well 44, a filter 45, suction conduit 46, pump 47, conduit 48, a boiler 49 controlled through a knob 50 and having an outlet 51 connected directly to the conduit 41. All of the listed components are housed within the box-like body 34.

The open end 36 of the pan 32 is sealed tight by a removable lid 52. Advantageously, portions, not shown, of the lid 52 or of the pan 32 would be made of a transparent material and equipped with filters.

It should be noted that the position of the sprayer 40 is offset from the vertical; this because, as the basket 37 is being rotated, the foodstuff would not be located exactly at the bottom thereof, but rather lead in the direction of motion.

The operation of the frying appliance 31 is similar to that of the frying appliance 1 as regards the oil frying cycle, except that the foodstuff is slowly and continuously stirred by the rotating basket 37.

Thus, a frying appliance according to the invention, whether embodied as the frying appliance 1 or 31, fully achieves its object of enabling frying with a minimal amount of oil, far smaller than that required by the traditional oil bath frying appliance types.

Furthermore, in comparison to traditional frying appliances, the oil is filtered continuously and always kept, therefore, in the best of conditions for use.

CLAIMS

1. A foodstuff frying appliance, particularly for domestic use, comprising a frying pan (3; 32) and a basket (5; 37) for the foodstuff inserted removably in said pan (3; 32), characterized in that it comprises at least one sprayer (7, 8; 40) for spraying said foodstuff in said basket (5, 37) with hot oil, means being provided for recovering the oil from the bottom (10; 43) of said pan (3; 32) heating the oil recovered, and pumping it toward said at least one sprayer (7, 8; 40).

2. A frying appliance according to Claim 1, characterized in that said means comprises a well (11; 44) at the bottom (10; 43) of said pan (3; 32), a conduit (12, 18, 20, 9; 46, 48, 41) extending from said well(11; 44) to said at least one sprayer (7, 8; 40), a pump (15; 47) and a boiler (17; 49) connected in said conduit (12, 18, 20, 9; 46, 48, 41).

3. A frying appliance according to Claim 2, characterized in that it comprises a filter (13; 45) for the oil, located in said well (11; 44) at the inlet to said conduit (12, 18, 20, 9; 46, 48, 41).

4. A frying appliance according to Claim 3, characterized in that boiler (17; 49) is of the electrically operated type wherein the heat output can be controlled.

5. A frying appliance according to Claim 4, characterized in that said basket (5) is substantially flat and positioned removably in said pan (3) on respective supports (6).

6. A frying appliance according to Claim 4, characterized in that said pan (32) and said basket (37) are substantially cylindrical in shape with a horizontal main axis, said bsket being supported rotatbly in said pan (32) and driven rotatively by a motor (38).

7. Method for frying foodstuff, characterised in that it comprises placing the foodstuff in a basket supported in a pan, spraying the foodstuff with a shower of hot oil, collecting the oil from the bottom of the pan, heating the oil, pumping and circulating the oil.

8. Method according to Claim 7, characterized in that it further comprises filtering the oil while collecting it from the bottom of the pan.

9. Method according to Claim 8, characterized in that it further comprises stirring the foodstuff by rotating said basket, said basket being cylindrical.

Fig-1

0168359

Fig-2

Fig-3

Fig-4

European Patent
Office

**EUROPEAN SEARCH REPORT**

Application number

EP 85 83 0152

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A- 621 821 (CRITTALL KITCHEN) <br> * Page 3, lines 23-42; figures 1-4; page 2, lines 3-9 * <br> --- | 1,2,3, 5,7,8 | A 47 J 37/12 <br> A 47 J 37/04 |
| A | FR-A- 975 375 (STUDER) <br> * The whole document * <br> --- | 1,6,9 | |
| A | US-A-4 103 605 (HEMBORG) <br> * The whole document * <br> --- | 1,6,9 | |
| A | GB-A-1 357 443 (TRAITEMENTS THERMIQUES) <br> * The whole document * <br> --- | 6,9 | |
| A | US-A-3 336 859 (BARKER et al.) <br> * The whole document * <br><br> ----- | 1,6,9 | TECHNICAL FIELDS SEARCHED (Int. Cl.4) <br><br> A 47 J |

The present search report has been drawn up for all claims

| Place of search | Date of completion of the search | Examiner |
|---|---|---|
| THE HAGUE | 25-09-1985 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82